# EUROPÄISCHE PATENTSCHRIFT

(11) **EP 2 791 503 B1**
(45) Veröffentlichungstag und Bekanntmachung des Hinweises auf die Patenterteilung: **06.07.2016**
(21) Anmeldenummer: 12808299.7
(22) Anmeldetag: 10.12.2012
(51) Int. Cl.: F03D 9/00, F03D 9/10, F03D 7/04

(54) **VERFAHREN ZUM BETRIEB EINER WINDENERGIEANLAGE BZW. EINES WINDPARKS**
METHOD OF OPERATION OF A WIND TURBINE OR A WIND PARK
PROCÉDÉ DE COMMANDE D'UNE ÉOLIENNE OU PARC ÉOLIEN

(30) Priorität: 12.12.2011 DE 102011088313
(43) Veröffentlichungstag der Anmeldung: 22.10.2014
(73) Patentinhaber: Wobben Properties GmbH, 26607 Aurich (DE)
(72) Erfinder: DE BOER, Joachim, 26605 Aurich (DE)
(74) Vertreter: Eisenführ Speiser
(86) Internationale Anmeldenummer: PCT/EP2012/074900
(87) Internationale Veröffentlichungsnummer: WO 2013/087553

(56) Entgegenhaltungen:
- EP-A1- 1 596 052
- EP-A2- 1 739 824
- WO-A1-2010/048706

## Beschreibung

Windenergieanlagen bzw. Windparks, bestehend aus einer Vielzahl von Windenergieanlagen, sind seit langem bekannt und zwar in verschiedensten Formen, Ausführungen, Größen und Varianten.

Eine Windenergieanlage ist dabei eine Anlage, welche Energie, die im Wind vorhanden ist, durch eine Umformung in elektrische Energie umsetzt. Diese elektrische Energie wird vornehmlich in ein elektrisches Netz eingespeist.

Der bekannte Nachteil der Windenergie besteht darin, dass sie mit dem Wind schwankt, d. h. dass abhängig von der aktuellen Windgeschwindigkeit die erzeugte elektrische Energie der Windenergieanlage schwanken kann. Dies gilt jedoch strenggenommen nur im Teillastbereich, also in dem Bereich der Windenergieanlage zwischen einer ersten Windgeschwindigkeit (Startwind) und einer zweiten Windgeschwindigkeit (Nennwind). Ist nämlich die Windstärke größer als die Nennwindgeschwindigkeit, so führen Schwankungen der Windgeschwindigkeit, die sich oberhalb der Nennwindgeschwindigkeit einstellen, zu keinen Schwankungen in der Erzeugung der elektrischen Energie, weil die Windenergieanlage so gesteuert wird, z. B. durch Anstellung der Rotorblätter der Windenergieanlage, dass die Drehzahl und/oder die erzeugte elektrische Leistung nahezu konstant bleibt.

Allerdings befindet sich eine Windenergieanlage zum größten Teil ihres Betriebes im Teillastbereich und in diesem Teillastbereich schwankt unmittelbar mit der Windgeschwindigkeit auch immer die erzeugte elektrische Leistung der Windenergieanlage, also wird mit schwankender Windgeschwindigkeit auch ständig schwankende Leistung, also ein schwankender Betrag der elektrischen Leistung (nämlich der Wirkleistung) in das Netz eingespeist.

Damit fallen Windenergieanlagen in vielen Betrachtungen zum Netzmanagement als Erzeuger für eine Grundlast aus, weil nicht mit hinreichender Wahrscheinlichkeit der Leistungsbeitrag der Windenergieanlage zum Netz vorhergesagt werden kann.

Es wäre nun theoretisch zwar möglich, eine Windenergieanlage stets suboptimal zu fahren, z. B. im Teillastbereich niemals mit der maximalen Leistung zu fahren, sondern mit einer suboptimalen Leistungsausbeute so zu betreiben, dass bei Windgeschwindigkeitsschwankungen im Teillastbereich die Rotorblätter der Windenergieanlage stets so angesteuert werden, dass die Schwankung der Windgeschwindigkeit ausgeglichen wird und somit die Windenergieanlage einen nahezu konstanten Leistungsbeitrag in das Netz einspeist.

Der Nachteil einer solchen Lösung besteht aber darin, dass dann auch im Teillastbereich der Windenergieanlage stets und ständig die Windenergieausbeute der Windenergieanlage nachgesteuert werden muss, z. B. durch Pitchen (Verstellen) der Rotorblätter oder durch Ansteuern eines geeigneten Generatorgegenmoments oder einer entsprechenden anderen Maßnahme, was einerseits für den Betrieb einer Windenergieanlage zusätzlich Energie kostet und andererseits auch die entsprechenden Bauteile ständig in Anspruch nimmt, so dass deren Alterung und Verschleiß beschleunigt wird.

Vor allem aber gehen bei einer solchen Betriebsweise wertvolle Beiträge der Leistung verloren und somit wird die gesamte Windenergieanlage nur über eine relativ geringe Effizienz verfügen.

Aufgabe der vorliegenden Erfindung ist es, die von den Windenergieanlagen an das Netz abgegebene elektrische Leistung zu verstetigen, ohne dabei die aus dem Stand der Technik bekannten Nachteile in Kauf zu nehmen.

### Stand der Technik:

Das deutsche Patent- und Markenamt hat in der Prioritätsanmeldung zu vorliegender Anmeldung folgenden Stand der Technik recherchiert: DE 27 51 341 A1, GB 2 263 734 A, DE 197 16 645 A1 und US 2004/0267466 A1.

Die Aufgabe wird erfindungsgemäß vor allem mit den Merkmalen des Anspruchs 1 gelöst. Vorteilhafte Weiterbildungen sind in den Unteransprüchen beschrieben.

Die vorliegende Erfindung schlägt vor, wie der Wunsch nach der Verstetigung der elektrischen Leistung einer Windenergieanlage praktisch umgesetzt werden kann. Hierzu kann eine Windenergieanlage oder ein Windpark (mit einer Vielzahl von Windenergieanlagen) zusammen mit einer Power-to-Gas-Einheit (Leistung-in-Gas-Umwandlungseinheit) betrieben werden. Die Power-to-Gas-Einheit wandelt z. B. elektrische Leistung in ein Brenngas (Wasserstoff, Methan etc.) um.

Es ist einsichtig, dass die Prognose für die Abgabe von elektrischer Leistung einer Windenergieanlage nicht für alle Zeiten sicher vorhergesagt werden kann, denn da der Wind weiterhin schwanken wird und zu ganz unterschiedlichen Tageszeiten schwankt, zu ganz unterschiedlichen Jahreszeiten schwankt, ist es gemäß der Erfindung vor allem relevant, dass ein verlässlicher Prognosezeitraum gewählt wird und dass innerhalb dieses Prognosezeitraums die ins Netz eingespeiste Leistung den gewünschten Wert (Prognoseleistung) aufweist, in jedem Fall aber nicht unterschreitet.

Dabei ist es zunächst einmal nicht relevant, ob die gesamte elektrische Leistung der Windenergieanlage oder des Windparks in das Netz eingespeist wird, sondern die Windenergieanlage oder der Windpark einerseits und die Power-to-Gas-Einheit andererseits müssen als Gesamteinheit von der Netzseite aus gesehen werden.

Relevant ist nämlich letztlich, welche elektrische Leistung den Verbrauchern, die am Netz angeschlossen sind, zur Verfügung gestellt wird und auch wenn die Power-to-Gas-Einheit am Netz angeschlossen ist, wird sie in dieser Betrachtung nicht als klassischer Verbraucher angesehen, sondern als Werkzeug, mittels dem die elektrische Leistung, die die Windenergieanlage oder der Windpark dem Netz zur Verfügung stellt, konstant gehalten werden kann.

Es ist daher auch nicht von Belang, ob die elektrische Leistung, die die Power-to-Gas-Einheit bezieht, aus dem elektrischen Zwischenkreis einer Windenergieanlage oder direkt vom Ausgang der Windenergieanlage oder vom Ausgang eines Windparks bezogen wird oder die Leistung erst aus dem Netz bezogen wird, wenn zuvor die gesamte Leistung der Windenergieanlage oder des Windparks in das Netz eingespeist worden ist.

Relevant für das Netz ist letztlich nur elektrische Leistung, die in das Netz eingespeist und nicht von der Power-to-Gas-Einheit verbraucht wird. Ist diese elektrische Leistung, auch "Prognoseleistung" oder "Grundlast" genannt, (nahezu) konstant, ist mithin die Einheit aus Windenergieanlage und Power-to-Gas-Einheit in der Lage, eine konstante Leistung in das Netz einzuspeisen, was dem Betreiber eines Netzes die Steuerung seines Netzes erheblich erleichtert.

Wenn nämlich alle Leistungsschwankungen der Windenergieanlage oder des Windparks, die sich aus der Windschwankung ergeben, in der Power-to-Gas-Einheit verbraucht werden, geht diese dem Netz letztlich nicht zur Verfügung gestellte elektrische Leistung nicht etwa verloren, sondern sie wird nur in eine andere Form umgewandelt, nämlich in ein Brenngas, z. B. Wasserstoff, Methan oder dergleichen. Mit anderen Worten: Power-to-Gas-Einheit ist eine Umwandlungseinheit zum Umwandeln von elektrischer Leistung in ein Brenngas.

Dieses Brenngas kann auf unterschiedliche Art und Weise weiterverarbeitet werden, sei es, dass es gespeichert wird oder in ein Gasnetz eingespeist wird. Auch ist es möglich, dass die Power-to-Gas-Einheit über einen steuerbaren Verbrennungsmotor verfügt, welchem ausgangsseitig ein elektrischer Generator angeschlossen ist, so dass mit Brenngas, welches von der Power-to-Gas-Einheit zuvor produziert und zwischengespeichert wurde, auch wiederum elektrische Leistung erzeugbar ist und diese kann dann, wenn der Generator an das elektrische Netz angeschlossen ist, in das Netz eingespeist werden, wenn dies gewünscht ist.

Damit der Verbrauch der Power-to-Gas-Einheit in der gewünschten Art und Weise gesteuert werden kann, kann die Power-to-Gas-Einheit mit dem Windpark oder der Windenergieanlage auch über eine Datenleitung verbunden sein.

In der Windenergieanlage oder in dem Windpark werden nun Windprognosedaten, z. B. von einer Wetterzentrale, Wetterstation oder dergleichen, verarbeitet und auf Basis dieser Windprognosedaten wird eine Leistungsprognose erstellt.

Wenn beispielsweise eine Windprognose vorliegt, der gemäß der Wind für die nächsten 30 Minuten ständig zwischen 6 und 8 m/sec. schwankt, also gemäß der Prognose 6 m/sec. nicht unterschreitet, 8 m/sec. aber auch nicht überschreitet, kann beispielsweise eine zuverlässige Prognose erstellt werden, der gemäß elektrische Leistung sicher für die nächsten 30 Minuten erzeugt werden kann, die unter Zugrundelegung der Leistungskurve der Windenergieanlage oder des Windparks einer elektrische Leistung entspricht, welche z. B. 6 m/sec. oder, wenn ein gewisser Sicherheitsabstand gewünscht wird, z. B. bei 5,7 m/sec. Windgeschwindigkeit möglich ist.

Dieser Prognosewert wird als Prognoseleistung ermittelt und dieser Wert kann auch über die Datenleitung an die Power-to-Gas-Station und/oder eine Steuerung bzw. Zentrale zur Steuerung des elektrischen Netzes übertragen werden.

Im Betrieb der Windenergieanlage bzw. des Windparks wird nun ständig auch die aktuelle durch den Wind jeweils vorgegebene Leistung erfasst.

Ist beispielsweise eine konstante Prognoseleistung für einen vorbestimmten Zeitraum, z. B. 30 Minuten, auf Basis von 5,7 m Windgeschwindigkeit pro Sekunde erstellt worden und liegt die aktuelle Windgeschwindigkeit bei 7,7 m, so ist der Differenzbetrag also 2 m/sec. elektrisches Leistungsäquivalent, die elektrische Leistung, die aktuell der Power-to-Gas-Einheit zur Verfügung gestellt wird, damit diese Leistung dort auch als Verbrauch abgerufen wird.

Da die aktuelle Abgabeleistung der Windenergieanlage oder des Windparks ständig erfasst wird, kann auch entsprechend die Leistung, die oberhalb der Prognoseleistung liegt, als Wert ständig der Power-to-Gas-Einheit zugeführt werden, d. h. die über die Prognose hinaus von der Windenergieanlage/dem Windpark erzeugte elektrische Leistung kann der Power-to-Gas-Einheit zugeführt werden, und diese wird entsprechend so gesteuert, dass sie stets die elektrische Leistung verbraucht, die nicht mehr den Verbrauchern im Netz zur Verfügung gestellt, sondern in der Power-to-Gas-Einheit verbraucht werden soll, damit die Einheit aus Windenergieanlage oder Windpark einerseits und Power-to-Gas-Einheit andererseits vom Netz aus gesehen eine nahezu konstante elektrische Leistung in das Netz einspeisen.

In einer Datenverarbeitungseinrichtung der Windenergieanlage oder des Windparks werden mithin ständig immer wieder neue Prognoseleistungen für vorbestimmte (neue) Prognosezeiträume ermittelt und bei Ablauf eines Prognosezeitraums wird der Betrieb fortgesetzt mit einem Folgeprognosezeitraum, in dem dann die Leistung entsprechend der vorliegenden Windprognose neu eingestellt wird.

Auch kann abhängig von dem Vorliegen der Windprognosedaten der Prognosezeitraum selbst verändert werden, z. B. von 30 Minuten auf 20 Minuten oder von 30 Minuten auf 40 Minuten, je nachdem, wie zuverlässig die Prognosedaten sind, die zur Verfügung gestellt werden.

Eine Windenergieanlage ist mit der Power-to-Gas-Einheit elektrisch verbunden. Die elektrische Verbindung besteht im Ausführungsbeispiel aus einer elektrischen Leitung, die gleichwohl auch als Teil eines elektrischen Netzes ausgeführt sein kann.

Wie beschrieben ist eine Power-to-Gas-Einheit in der Lage, aus elektrischem Strom Gas zu erzeugen, z. B. Wasserstoff oder Methan oder dergleichen, also ein Gas, welches für die Verbrennung, vor allem aber auch als Brennstoff für einen Motor geeignet ist. Für die Installation von Windenergieanlagen oder Windparks sind ohnehin große Aggregate, z. B. Kräne, Lkw etc., notwendig, die bislang regelmäßig mit Diesel, Benzin oder dergleichen betrieben werden. Wenn nun solche Aggregate auf die Verbrennung von Gas, z. B. CH₄ (Methan) umgestellt werden, kann das Gas, welches mit der Power-to-Gas-Einheit erzeugt wird, auch zum Antrieb der Aggregate eingesetzt werden, mittels denen eine Windenergieanlage errichtet wird.

Wenn beispielsweise in einer abgelegenen Gegend eine Windenergieanlage errichtet wird, kann die elektrische Energie, die diese erste Windenergieanlage erzeugt, in einer Power-to-Gas-Einheit zur Erzeugung des Gases verwendet werden, so dass mit dem Gas die weiteren Windenergieanlagen des Windparks errichtet werden, indem das Gas den Antriebsaggregaten, also Kränen, Lkw, Fahrzeuge etc., die zur Errichtung der Windenergieanlagen eines Windparks notwendig sind, zur Verfügung gestellt wird. Mithin würde der Windpark keine fossilen Brennstoffe zur Errichtung benötigen, sondern könnte mit "grünem Gas", also z. B. Windgas der beschriebenen Weise, errichtet werden, was insgesamt die Ökobilanz des Windparks verbessert. Gerade in abgelegenen Gegenden ist der Bezug von Brennstoffen häufig ohnehin umständlich, oftmals jedenfalls schwierig und damit sind auch die Brennstoffe selbst sehr teuer und durch die Erzeugung von Brennstoff vor Ort können insofern die Brennstoffbezugskosten, die für die Aggregate zur Errichtung eines Windparks benötigt werden, verringert werden. Wenn die Power-to-Gas-Einheit dann in einem Container oder dergleichen untergebracht ist, kann nach Errichtung des Windparks der Container mit der Power-to-Gas-Einheit zur nächsten Baustelle transportiert werden.

Die Erfindung ist nachfolgend anhand eines Ausführungsbeispiels näher erläutert.
- Fig. 1: zeigt eine schematische Ansicht einer Windenergieanlage,
- Fig. 2: zeigt schematisch ein Übersichtsbild einer Windenergieanlage und einer Power-to-Gas-Einheit gemäß der Erfindung,
- Fig. 3: zeigt eine schematische Darstellung eines Stromnetzes, eines Erdgasnetzes und Verbrauchern,
- Fig. 4: zeigt eine schematische Darstellung des erfindungsgemäßen Verfahrens zum Betrieb einer Windenergieanlage oder einer Power-to-Gas-Einheit in einer beispielhaften Übersicht und
- Fig. 5: zeigt eine Leistungskurve einer Windenergieanlage.

Gleiche Bezugszeichen können gleiche aber auch ähnliche, nicht identische Elemente nachfolgend bezeichnen. Nachfolgend wird der Vollständigkeit halber eine Windenergieanlage mit einem Synchrongenerator und getriebelosem Konzept mit einem Vollumrichter erläutert.

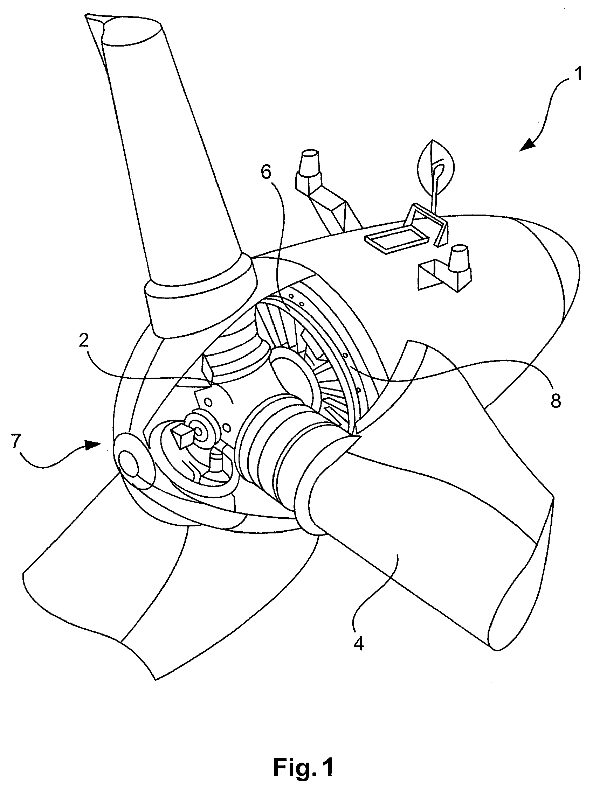

Fig. 1 zeigt schematisch eine Windenergieanlage 1. Insbesondere ist als ein Beispiel eine Gondel einer getriebelosen Windenergieanlage gezeigt. Die Nabe 2 ist aufgrund der teilweise geöffnet dargestellten Verkleidung (Spinner) zu erkennen. An der Nabe 2 sind drei Rotorblätter 4 befestigt, wobei die Rotorblätter 4 nur in ihrem nabennahen Bereich dargestellt sind. Die Nabe 2 mit den Rotorblättern 4 bildet einen aerodynamischen Rotor 7. Die Nabe 2 ist mit dem Rotor 6 des Generators, der auch als Läufer 6 bezeichnet werden kann und nachfolgend als Läufer 6 bezeichnet wird, mechanisch fest verbunden. Der Läufer 6 ist gegenüber dem Stator 8 drehbar gelagert.

Der Läufer 6 wird während seiner Drehung relativ zum Stator 8 bestromt, üblicherweise mit einem Gleichstrom, um dadurch ein magnetisches Feld zu erzeugen und ein Generatormoment bzw. Generatorgegenmoment aufzubauen, das durch diesen Erregerstrom entsprechend auch eingestellt und verändert werden kann. Ist der Läufer 6 somit elektrisch erregt, erzeugt seine Drehung gegenüber dem Stator 8 ein elektrisches Feld in dem Stator 8 und damit einen elektrischen Wechselstrom.

Die Erfindung lässt sich nicht nur mit einer getriebelosen Windenergieanlage, sondern auch mit einer getriebebaren Windenergieanlage umsetzen.

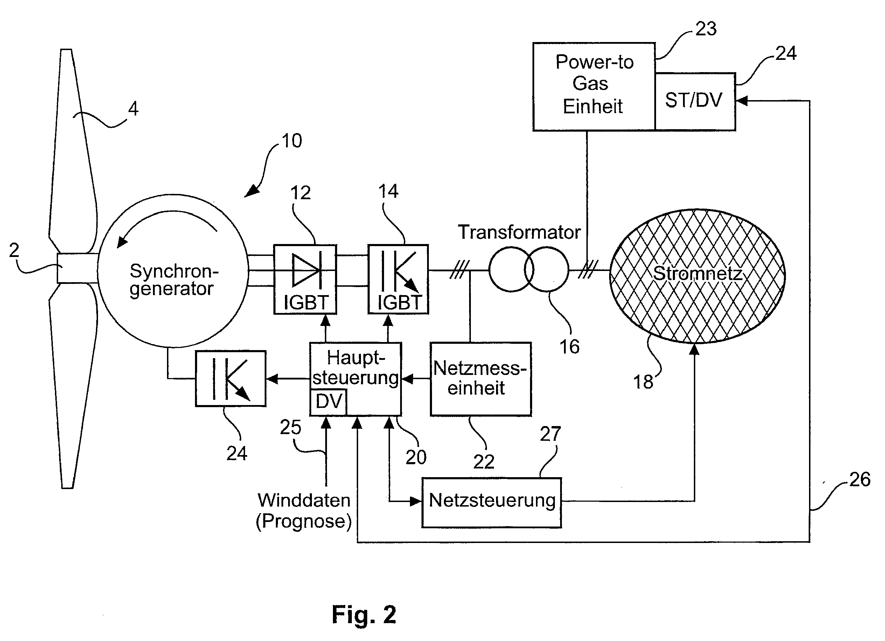

Fig. 2 schematisch ein Übersichtsbild einer Windenergieanlage und einer Power-to-Gas-Einheit gemäß der Erfindung. Insbesondere ist ein Übersichtsbild mit getriebeloser Rotor-Generatorankopplung mit Frequenzmessung in einer Windenergieanlage mit einer damit verbundenen Power-to-Gas-Einheit gezeigt.

Der im Generator 10, der im Wesentlichen aus dem Läufer 6 und Stator 8 aufgebaut ist, erzeugte Wechselstrom wird gemäß dem in Fig. 2 gezeigten Aufbau über einen Gleichrichter 12 gleichgerichtet. Der gleichgerichtete Strom bzw. die gleichgerichtete Spannung wird dann mit Hilfe eines Wechselrichters 14 in ein 3-Phasensystem mit gewünschter Frequenz gewandelt. Das so erzeugte dreiphasige Strom-Spannungs-System wird mittels eines Transformators 16 in der Spannung insbesondere hochtransformiert, um in ein angeschlossenes Stromnetz 18 eingespeist zu werden. Theoretisch könnte auf den Transformator 16 verzichtet werden oder dieser durch eine Drossel ersetzt werden. Üblicherweise sind die Spannungsanforderungen im Stromnetz 18 aber so, dass eine Hochtransformierung mittels Transformator 16 erforderlich ist.

Zur Steuerung wird eine Hauptsteuerung 20 verwendet, die auch als Main-Control-Einheit bezeichnet werden und die oberste Regelungs- und Steuereinheit der Windenergieanlage bilden kann. Die Hauptsteuerung 20 erhält ihre Information unter anderem über die Netzfrequenz (aber z. B. auch Netzspannung, Phasenwinkel) von der untergeordneten Netzmesseinheit 22. Die Hauptsteuerung 20 steuert den Wechselrichter 14 sowie den Gleichrichter 12. Grundsätzlich könnte natürlich auch ein ungesteuerter Gleichrichter verwendet werden. Außerdem kann die Hauptsteuerung 20 einen Gleichstromsteller 24 zum Einspeisen des Erregerstroms in den Läufer 6 steuern, der Teil des Generators 10 ist. Die Hauptsteuerung 20 modifiziert unter anderem bei Unterschreiten eines vorgegebenen Netzfrequenzgrenzwertes die Einspeisung bzw. den Arbeitspunkt des Generators 10. Da der Generator 10 drehzahlvariabel betrieben wird, erfolgt die Einspeisung in das Netz wie beschrieben mit einem Vollumrichter, der im Wesentlichen durch den Gleichrichter 12 und den Wechselrichter 14 gebildet wird.

Im Betrieb wird die Netzspannung und Netzfrequenz von der Netzmesseinheit 22 permanent dreiphasig gemessen. Aus der Messung ergibt sich - jedenfalls im Falle einer Netzfrequenz von 50 Hz - alle 3,3 ms ein neuer Wert für eine der 3 Phasenspannungen. Die Netzfrequenz wird somit je Spannungshalbwelle erfasst, gefiltert und mit den voreingestellten Grenzwerten verglichen. Für ein 60 Hz-System wäre etwa für alle 2,7 ms, nämlich etwa zu jedem Nulldurchgang, ein Wert für eine der 3 Phasenspannungen verfügbar.

In Fig. 2 ist auch dargestellt, dass die Windenergieanlage 1 mit einer Power-to-Gas-Einheit 23 elektrisch verbunden ist. Die Power-to-Gas-Einheit 23 kann hinter dem Transformator 16 (oder alternativ davor) angeschlossen sein.

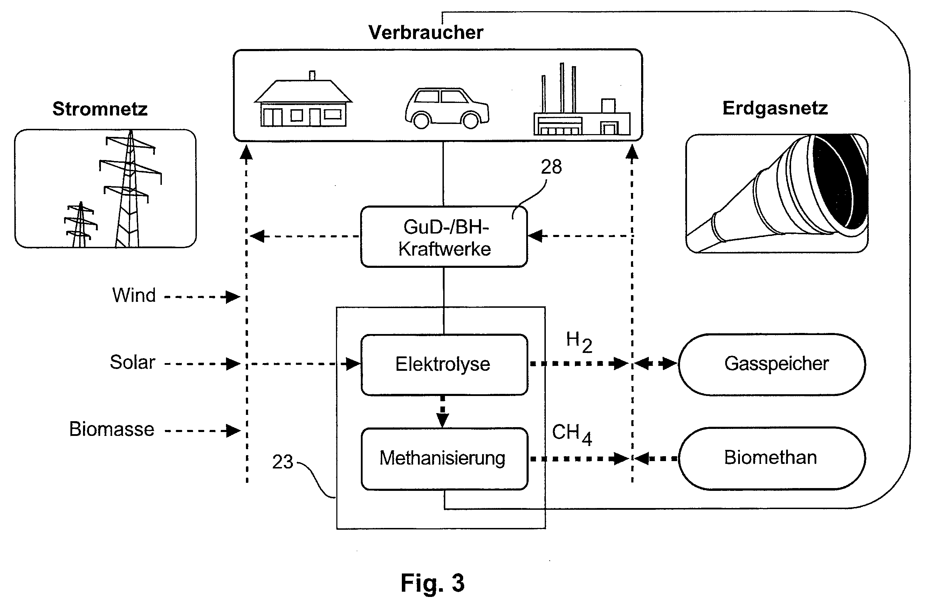

Eine solche Power-to-Gas-Einheit 23 (Umwandlungseinheit zum Umwandeln von elektrischer Leistung in ein brennbares Gas) als solches ist bereits in verschiedenen Formen bekannt, beispielsweise auch aus WO 2009/065577. Eine solche Power-to-Gas-Einheit 23 ist auch bekannt von der Firma SolarFuel (www.SolarFuel.de) und ist auch in Fig. 3 schematisch dargestellt. An einer solchen Power-to-Gas-Einheit 23 kann z. B. mittels einer Elektrolyse, wozu elektrische Leistung von einer Windenergieanlage 1, einer Solarquelle oder einer Biomassequelle (mit elektrischer Erzeugung) bezogen wird, zunächst Wasserstoff erzeugt werden. Die Power-to-Gas-Einheit 23 kann auch eine Methanisierungs-einheit aufweisen, welche den erzeugten Wasserstoff unter Verwendung einer CO₂-Quelle dazu verwendet, Methangas (CH₄), herzustellen. Das erzeugte Gas, sei es Wasserstoff oder Methan, kann in einen Gasspeicher geleitet werden oder in ein Gasleitungsnetz, z. B. ein Erdgasnetz, eingespeist werden.

Schließlich kann die Power-to-Gas-Einheit 23 auch eine Steuerung 24 aufweisen, welche über eine Kommunikationsleitung 26, sei es drahtbehaftet, z. B. Lichtwellenleiter, oder drahtlos, mit der Hauptsteuerung 20 der Windenergieanlage verbunden ist.

Für die Elektrolyse in der Power-to-Gas-Einheit 23 wird Gleichstrom benötigt, welcher mittels eines Gleichrichters, der z. B. mit dem elektrischen Netz 18 verbunden ist, erzeugt werden kann bzw. welcher eine elektrische Leistung aus dem Netz 18 in einen Gleichstrom umwandelt und somit elektrische Leistung der Elektrolyseeinrichtung der Power-to-Gas-Einheit 23 zur Verfügung stellt. Der Gleichrichter kann dabei z. B. IGBT (Insulated Gate Bipolar Transistor)-Schalter, Thyristoren oder Dioden aufweisen und verfügt über eine Steuereinheit. Die Schalter werden in der üblichen Weise gesteuert, um aus dem Wechselstrom, der aus dem Netz 18 bezogen wird, einen Gleichstrom zu erzeugen.

Die Power-to-Gas-Einheit ist eine Einheit 23, in welcher elektrische Energie bzw. Leistung verbraucht wird, um letztlich das Gas (Brenngas) herzustellen.

Fig. 3 zeigt eine schematische Darstellung eines Stromnetzes, eines Erdgasnetzes und Verbrauchern. Im dargestellten Beispiel ist auch ein Gas- und Dampfwerk bzw. ein Blockheizkraftwerk 28 ausgebildet, in welchem das Verbrennungsgas in einem Verbrennungsmotor verbrannt wird, so dass in einem an den Verbrennungsmotor angeschlossenen elektrischen Generator wiederum elektrische Leistung erzeugt werden kann, die dann wiederum dem elektrischen Netz zur Verfügung gestellt werden kann.

Die Windenergieanlage 1 kann eine Einzelanlage sein, sie kann aber auch stellvertretend für einen Windpark stehen, welcher aus einer Vielzahl von Windenergieanlagen besteht.

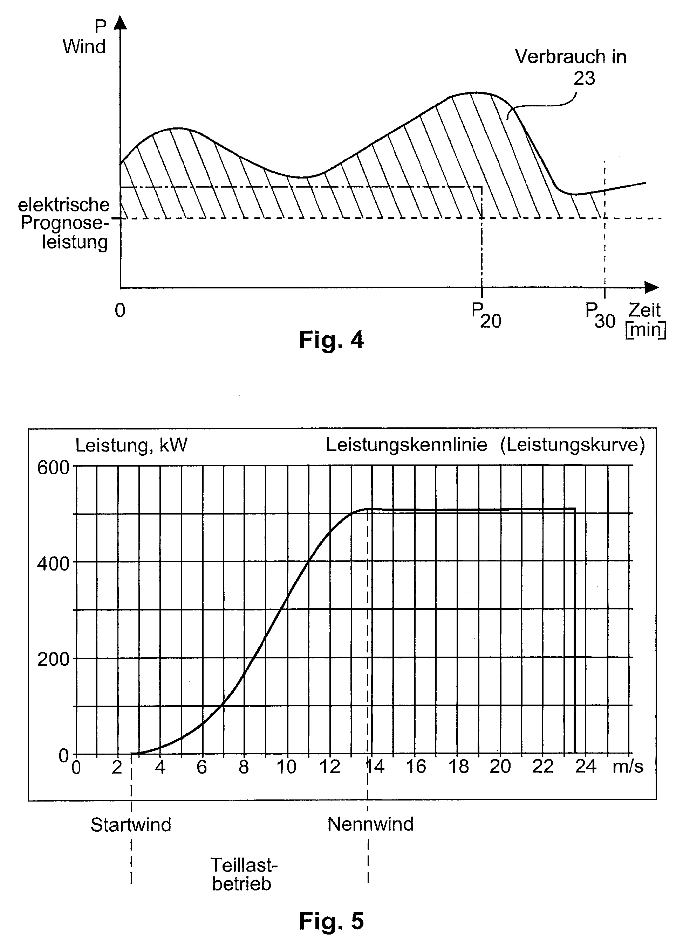

Die Windenergieanlage weist die Hauptsteuerung 20 mit einer Datenverarbeitungseinrichtung DV auf. Diese Datenverarbeitungseinrichtung DV weist unter anderem einen Dateneingang 25 auf, über den Windprognosedaten der Datenverarbeitungseinrichtung DV zur Verfügung gestellt werden. Die Datenverarbeitungseinrichtung DV erstellt aus diesen Windprognosedaten für einen vorbestimmten Prognosezeitraum, z. B. 20, 30, 40, 50 oder 60 Minuten oder länger, eine Leistungsprognose und kann aufgrund der erstellten Leistungsprognose aufgrund der Verarbeitung der Leistungskurve - ein Beispiel hierfür ist in Fig. 5 dargestellt - der Windenergieanlage 1 oder des Windparks auch sehr zuverlässig eine Prognoseleistung ermitteln, also eine elektrische Mindestleistung, die letztlich dem Netz zuverlässig im gewählten Prognosezeitraum sicher konstant zur Verfügung gestellt werden kann.

Gleichzeitig ermittelt die Windenergieanlage 1 oder der Windpark aktuell stets aufs Neue, z. B. in Abständen von 5 bis 10 Sekunden (oder kürzer), die aktuelle elektrische Leistung der Windenergieanlage 1, welche vom aktuellen Wind abhängig ist.

Die Werte der aktuellen Leistung der Windenergie, die dabei oberhalb der Prognoseleistung (Mindestleistung) liegt, werden z. B. als Information, Datum, Signal etc. der Steuer- und Datenverarbeitungseinrichtung 24 der Power-to-Gas-Einheit 23 zugeführt, so dass der Power-to-Gas-Einheit 23 der elektrische Verbrauch vorgegeben wird.

Ist also z. B. in der Windenergieanlage 1 oder in dem Windpark eine Prognoseleistung von 1 Megawatt (MW) festgelegt worden, erzeugt aber die Windenergieanlage 1 oder der Windpark aktuell eine Leistung von 1,3 MW, so wird der Differenzbetrag, also 300 kW, als Wert ermittelt und die Steuer- und Datenverarbeitungseinrichtung 24 der Power-to-Gas-Einheit 23 erhält diesen Wert als Steuerwert, so dass dann entsprechend die Power-to-Gas-Einheit 23 mit einem Verbrauch von 300 kW betrieben wird.

Sinkt der Wind etwas und stellt sich nachfolgend nur noch eine aktuelle Leistung von 1,2 MW ein, sinkt auch entsprechend der elektrische Verbrauch der Power-to-Gas-Einheit 23 auf 200 kW, steigt der Wind, so dass die Windenergieanlage oder der Windpark 1,4 MW erzeugt, so steigt der Verbrauch der Power-to-Gas-Einheit entsprechend auf 400 kW usw.

Vor Ablauf des Prognosezeitraums wird eine neue Prognose erstellt und für diesen neuen Prognosezeitraum wird wiederum eine neue konstante Leistung (neue Prognoseleistung) festgelegt, so dass, wenn überhaupt, die Prognoseleistung sich beim Übergang von einem auf den nächsten Prognosezeitraum ändert.

Durch die gemeinsame Kommunikationsleitung 26 zwischen der Hauptsteuerung 20 der Windenergieanlage 1 oder des Windparks einerseits und der Steuer- und Datenverarbeitungseinrichtung 24 der Power-to-Gas-Einheit andererseits können auch aktuelle Winddaten oder die Daten über die Verbrauchsleistung der Power-to-Gas-Einheit ausgetauscht werden, um somit die konstante Bereitstellung der ins Stromnetz 18 eingespeisten konstanten Mindestleistung zu gewährleisten.

Die Hauptsteuerung 20 kann darüber hinaus ferner auch mit einer Steuerung 27 oder einer Zentrale zur Steuerung des elektrischen Netzes des Stromnetzes verbunden sein, so dass dort stets der Wert der konstanten elektrischen Einspeisung in das elektrische Netz abgerufen werden kann bzw. vorliegt.

Falls die aktuelle Windgeschwindigkeit und damit die aktuelle erzeugte elektrische Leistung der Windenergieanlage 1 oder des Windparks unter die Prognoseleistung fällt, wird der elektrische Verbrauch der Power-to-Gas-Einheit auf "Null" (oder auf einen geringstmöglichen Wert) gefahren und gleichzeitig kann evtl. ein Dampf- und Gas-Dampfkraftwerk bzw. BHKW 28 angefahren werden, um zusätzlich elektrische Leistung zur Verfügung zu stellen, die nicht von der Windenergieanlage 1 oder dem Windpark zur Verfügung gestellt werden kann, so dass im Ergebnis dem Stromnetz noch immer die elektrische Prognoseleistung zuverlässig zur Verfügung gestellt werden kann, im Bedarf sogar noch mehr, indem entsprechend das GuD/BHKW mit einer höheren Leistung betrieben wird als notwendig.

Fig. 4 zeigt eine schematische Darstellung des erfindungsgemäßen Verfahrens zum Betrieb einer Windenergieanlage 1 oder einer Power-to-Gas-Einheit 23 in einer beispielhaften Übersicht und insbesondere, wie die Leistungsbeiträge der Windenergieanlage 1 der Erfindung verteilt werden können.

In der beispielhaften Übersicht von Fig. 4 ist gezeigt, welche Leistung die Windenergieanlage 1 über 30 Minuten erzeugt und zur Vereinfachung sei angenommen, dass die erzeugte Leistung exakt dem entspricht, was auch durch die Prognose vorhergesagt wurde.

Aufgrund der Prognose wurde eine vorbestimmte elektrische Prognoseleistung festgelegt. Diese elektrische Prognoseleistung wird von der Windenergieanlage 1 während des gesamten Prognosezeitraums auch erzeugt und diese wird dem Stromnetz 18 als konstante Leistung zur Verfügung gestellt.

Aufgrund der Schwankungen des Windes innerhalb des Prognosezeitraums erzeugt die Windenergieanlage 1 aber eine elektrische Leistung, die höher liegt als die elektrische Prognoseleistung und somit wird die Leistung der Windenergieanlage 1, die oberhalb der elektrischen Prognoseleistung liegt, in der Power-to-Gas-Einheit 23 verbraucht, so dass während des gesamten Prognosezeitraums die von der Windenergieanlage in das Stromnetz 18 eingespeiste elektrische Leistung stets konstant gehalten werden kann.

Es versteht sich von selbst, dass gerade in dem gezeigten Beispiel auch die Prognoseleistung höher angesetzt werden kann, beispielsweise wenn ein kürzerer Prognosezeitraum, z. B. 20 Minuten P20 gewählt wird, so dass dann gemäß der Strichpunktlinie eine höhere elektrische Prognoseleistung eingestellt werden kann.

Ob letztlich eine höhere elektrische Prognoseleistung P20 oder eine niedrigere Prognoseleistung P30 eingestellt wird, hängt maßgeblich auch davon ab, welche Anforderung seitens der Netzsteuerung 27 vorgegeben wird.

Wird nämlich ein längerer Prognosezeitraum gefordert, kann wie im dargestellten Beispiel, wenn ein 30-minütiger Prognosezeitraum gefordert wird, nur eine relativ geringe zuverlässige elektrische Prognoseleistung eingestellt werden. Wird hingegen eine möglichst hohe konstante Prognoseleistung gefordert und kann dabei der Prognosezeitraum verkürzt werden, so ist mit Festlegung der Prognoseleistung P20 auch dies zu realisieren.

Fig. 5 zeigt wie dargestellt eine typische Leistungskennlinie (Leistungskurve) einer Windenergieanlage 1. Die Windenergieanlage 1 fängt mit der Leistungserzeugung beim Erreichen des Startwindes an, im Beispiel ca. 3 m/s. Bei weiter steigender Windgeschwindigkeit befindet sich dann die Windenergieanlage 1 im sogenannten "Teillastbetrieb", bis die Nennwindgeschwindigkeit, z. B. ca. 13,5 m/s. erreicht wird. Bei Windgeschwindigkeiten oberhalb des Nennbetriebs befindet sich die Windenergieanlage im Nennbetrieb, erzeugt dabei also ihre maximale elektrische Leistung.

Besonders interessant ist der Teillastbetrieb, weil dort die erzeugte elektrische Leistung von der Windgeschwindigkeit abhängt und wenn der Wind über einen gewissen Zeitraum schwankt, schwankt auch die erzeugte elektrische Leistung der Windenergieanlage 1 oder des Windparks. Durch eine entsprechende Steuerleitung ist es auch möglich, dass die Power-to-Gas-Einheit 23 durch die Netzsteuerung 27 direkt gesteuert wird, z. B. eine Vorgabe hinsichtlich der abzunehmenden und somit in der Power-to-Gas-Einheit 23 verbrauchten elektrischen Leistung umzusetzen.

Die Erfindung betrifft ein Verfahren zum Steuern einer Windenergieanlage bzw. eines Windparks und einer Power-to-Gas-Einheit. Wenn die Windenergieanlage mehr Energie erzeugt als sie derzeit in das Versorgungsnetz einspeisen kann, dann kann diese überschüssige Energie verwendet werden, um die Power-to-Gas-Einheit mit elektrischer Energie zu versorgen, welche dann zur Umwandlung bzw. Erzeugung von Brenngas verwendet wird. Ferner kann, basierend auf einer Windprognose, ebenfalls eine Prognose über die voraussichtlich erzielbare elektrische Leistung der Windenergieanlage bzw. des Windparks ermittelt werden. Wenn jedoch während des Prognosezeitraumes mehr Wind vorhanden ist als ursprünglich prognostiziert, dann kann die durch die Windenergieanlage aufgrund der höheren Windgeschwindigkeit zusätzlich erzeugte elektrische Leistung beispielsweise nicht in das Versorgungsnetz eingespeist werden, sondern wird an die Power-to-Gas-Einheit übertragen, welche die elektrische Energie verwendet, um ein Brenngas zu erzeugen.

Gemäß einem Aspekt der vorliegenden Erfindung kann für den Fall, dass die Windenergieanlage in einem Teillastbetrieb (d. h. die Windgeschwindigkeit ist größer als die Startwindgeschwindigkeit, aber kleiner als die Nennwindgeschwindigkeit) betrieben wird, diejenige elektrische Leistung an die Power-to-Gas-Einheit übertragen werden, die über die prognostizierte elektrische Leistung hinaus produziert worden ist.

## Patentansprüche

1. Verfahren zum Betrieb einer Windenergieanlage, eines Windparks, bestehend aus einer Vielzahl von Windenergieanlagen, oder dergleichen und einer damit elektrisch verbundenen Power-to-Gas-Einheit,
wobei die Windenergieanlage oder der Windpark bei ausreichendem Wind elektrische Leistung erzeugt und diese in ein an die Windenergieanlage oder an den Windpark angeschlossenes elektrisches Netz einspeist,
wobei die Windenergieanlage oder die Windenergieanlagen des Windparks mit einer vorbestimmten Leistungskurve betrieben werden,
wobei elektrische Leistung durch die Windenergieanlage oder den Windpark ab Erreichen einer ersten Windgeschwindigkeit (Startwind) erzeugt wird,
wobei sich die Windenergieanlage oder der Windpark in einem Teillastbetrieb befindet, solange die Windgeschwindigkeit zwischen der ersten Windgeschwindigkeit (Startwind) und einer zweiten Windgeschwindigkeit (Nennwind) liegt und
wobei die Windenergieanlage oder der Windpark sich in einem Nennleistungsbereich befindet, wenn die Windgeschwindigkeit in einem Bereich liegt, welcher größer ist als die zweite Windgeschwindigkeit (Nennwindgeschwindigkeit),
wobei nur ein vorbestimmter Teil der von der Windenergieanlage oder dem Windpark erzeugten elektrischen Leistung in der Power-to-Gas-Einheit verbraucht wird, so dass in der Power-to-Gas-Einheit ein brennbares Gas, insbesondere Wasserstoff und/oder Methangas oder dergl., erzeugt wird und **dadurch gekennzeichnet dass**
in der Windenergieanlage oder in dem Windpark eine Datenverarbeitungseinrichtung ausgebildet ist oder zugeordnet ist, dass in der Datenverarbeitungseinrichtung Windprognosedaten verarbeitet werden, die für einen vorbestimmten Zeitraum gelten, dass auf Basis der Windprognosedaten ein Prognosewert für die Leistung ermittelt wird, die die Windenergieanlage oder der Windpark für den Prognosezeitraum sicher oder mit großer Sicherheit, z. B. mit einer Wahrscheinlichkeit von mehr als 90%, vorzugsweise 95%, erzeugen kann und
wobei der Anteil der elektrischen Leistung, die die Windenergieanlage oder der Windpark bei Teillastbetrieb erzeugt und die nicht in der Power-to-Gas-Einheit verbraucht wird, sondern in das angeschlossene elektrische Netz eingespeist wird, für einen vorbestimmten Zeitabschnitt, z. B. 10 Minuten oder mehr, z. B. 1 Stunde, auf den Prognosewert für die leistung nahezu konstant eingestellt wird.

2. Verfahren nach Anspruch 1,
wobei die Windenergieanlage und die Power-to-Gas-Einheit über eine Daten-kommunikationseinrichtung miteinander verbunden sind und Daten der Windenergiean-lage, z. B. Windgeschwindigkeitsdaten, die aktuelle elektrische Erzeugerleistung, Windprognosedaten etc., an die Power-to-Gas-Einheit übertragen werden und dort zur Steuerung der Power-to-Gas-Einheit verarbeitet werden.

3. Verfahren nach einem der vorhergehenden Ansprüche,
wobei die Windenergieanlage und die Power-to-Gas-Einheit räumlich nahe zueinander angeordnet sind, z. B. in einem Abstand von 500 m bis 20 km.

4. Verfahren nach einem der vorhergehenden Ansprüche,
wobei die Windenergieanlage und/oder der Windpark Daten über den Zeitraum, in dem eine nahezu konstante Leistung in das Netz einspeist wird, an eine Datenzentrale zur Steuerung des elektrischen Netzes überträgt.

5. Verfahren nach einem der vorherigen Ansprüche,
wobei die Steuerung der Power-to-Gas-Einheit abhängig ist von der Vorhersage und den aktuellen Windverhältnissen und damit der aktuellen Erzeugung elektrischer Energie bzw. Leistung durch die Windenergieanlage bzw. den Windpark.

6. Verfahren nach Anspruch 1,
wobei die Windenergieanlage oder der Windpark ständig die Differenz zwischen der aktuellen, durch den Wind vorgegebenen Leistung der Windenergieanlage oder dem Windpark einerseits und dem aktuelle Prognosewert andererseits ermittelt und der ermittelte Differenzbetrag als Steuersignal an die Power-to-Gas-Einheit übertragen wird, in der der übermittelte Wert zur Steuerung der Power-to-Gas-Einheit verarbeitet wird, so dass die Power-to-Gas-Einheit stets die Leistung aufnimmt, die dem ermittelten Differenzbetrag zwischen der aktuellen, durch den Wind vorgegebenen Leistung der Windenergieanlage oder des Windparks einerseits und dem Prognosewert andererseits entspricht.

7. Verfahren nach einem der vorhergehenden Ansprüche,
wobei der Prognosezeitraum mehr als 10 Min. beträgt, vorzugsweise mehr als 20 Min. oder mehr als 30 Min. oder mehr als 1 Stunde.

8. Verfahren nach einem der vorhergehenden Ansprüche,
wobei die Windenergieanlage oder der Windpark über einen Dateneingang verfügt, welcher mit der Datenverarbeitungsanlage verbunden ist,
wobei der Dateneingang mit einer Steuerung oder Zentrale zur Steuerung des angeschlossenen Netzes verbunden ist und dort ein Wert vorgebbar ist, welcher den ermittelten Differenzbetrag ersetzen kann und dass über eine Datenleitung der ermittelte Differenzbetrag an die Steuerung bzw. Zentrale zur Steuerung des elektrischen Netzes übertragen wird.

9. Verfahren nach einem der vorhergehenden Ansprüche,
wobei die Power-to-Gas-Einheit über einen Verbrennungsmotor verfügt, dem das durch die Power-to-Gas-Einheit erzeugte Gas zugeführt wird, dass dem Motor ein Generator nachgeordnet ist, mit dem elektrische Energie oder Leistung erzeugbar ist, die in das angeschlossene elektrische Netz eingespeist werden kann, und dass der Verbrennungsmotor bzw. der angeschlossene Generator elektrische Leistung erzeugt, falls die erzeugte Leistung der Windenergieanlage oder des Windparks für einen vorbestimmten Zeitraum unterhalb der Prognoseleistung bleibt.

10. Kombikraftwerk, bestehend aus einer Windenergieanlage, einem Windpark oder dergleichen (z. B. Photovoltaik-Anlage) einerseits und einer damit elektrisch verbundenen Power-to-Gas-Einheit andererseits zur Durchführung des Verfahrens nach einem der vorhergehenden Ansprüche.

## Claims

1. A method for operating a wind turbine, a wind farm comprising a multiplicity of wind turbines or the like and a power-to-gas unit electrically connected thereto, wherein the wind turbine or the wind farm generates electric power if there is sufficient wind and feeds this power into an electrical grid connected to the wind turbine or to the wind farm,
wherein the wind turbine or the wind turbines of the wind farm are operated with a predetermined power curve,
wherein electric power is generated by the wind turbine or the wind farm once a first wind speed (starting wind) has been reached,
wherein the wind turbine or the wind farm is in a partial-load operating mode as long as the wind speed is between the first wind speed (starting wind) and a second wind speed (nominal wind), and
wherein the wind turbine or the wind farm is in a nominal power range when the wind speed is in a range which is greater than the second wind speed (nominal wind speed),
wherein only a predetermined proportion of the electric power generated by the wind turbine or the wind farm is consumed in the power-to-gas unit, with the result that a combustible gas, in particular hydrogen and/or methane gas or the like, is generated in the power-to-gas unit, and **characterized by**
a data processing device is designed or assigned in the wind turbine or in the wind farm such that wind forecast data which apply to a predetermined time period are processed in the data processing device, and that a forecast value for the power which can be generated by the wind turbine or the wind farm for the forecast time period safely or very reliably, for example with a probability of more than 90%, preferably 95%, is determined on the basis of the wind forecast data, and
wherein the proportion of the electric power which is generated by the wind turbine or the wind farm in the partial-load operating mode and which is not consumed in the power-to-gas unit but is fed into the connected electric grid is set to be virtually constant to the forecast value for the power for a predetermined time segment, for example 10 minutes or more, for example 1 hour.

2. The method as claimed in claim 1,
wherein the wind turbine and the power-to-gas unit are connected to one another via a data communication device, and data from the wind turbine, for example wind speed data, the present electric generator power, wind forecast data etc., are transmitted to the power-to-gas unit and are processed there for controlling the power-to-gas unit.

3. The method as claimed in either of the preceding claims,
wherein the wind turbine and the power-to-gas unit are arranged physically close to one another, for example at a distance of from 500 m to 20 km.

4. The method as claimed in one of the preceding claims,
wherein the wind turbine and/or the wind farm transmits data relating to the time period in which a virtually constant power is fed into the grid to a data control center for controlling the electric grid.

5. The method as claimed in one of the preceding claims,
wherein the control of the power-to-gas unit is dependent on the prediction and the present wind conditions and therefore on the present generation of electric energy or power by the wind turbine or the wind farm.

6. The method as claimed in claim 1,
wherein the wind turbine or the wind farm constantly determines the difference between the present power, predetermined by the wind, of the wind turbine or the wind farm, on the one hand, and the present forecast value, on the other hand, and the determined differential absolute value is transmitted as control signal to the power-to-gas unit, in which the transmitted value is processed for controlling the power-to-gas unit, with the result that the power-to-gas unit always draws the power which corresponds to the determined differential absolute value between the present power, predetermined by the wind, of the wind turbine or the wind farm, on the one hand, and the forecast value, on the other hand.

7. The method as claimed in one of the preceding claims,
wherein the forecast time period is more than 10 min, preferably more than 20 min or more than 30 min or more than 1 hour.

8. The method as claimed in one of the preceding claims,
wherein the wind turbine or the wind farm has a data input, which is connected to the data processing system,
wherein the data input is connected to a controller or control center for controlling the connected grid and a value which can replace the determined differential absolute value is predeterminable there, and the determined differential absolute value is transmitted to the controller or control center for controlling the electric grid over a data line.

9. The method as claimed in one of the preceding claims,
wherein the power-to-gas unit has an internal combustion engine, to which the gas generated by the power-to-gas unit is supplied, a generator is connected downstream of the engine and can be used to generate electric energy or power which can be fed into the connected electric grid, and the internal combustion engine or the connected generator generates electric power if the generated power of the wind turbine or the wind farm remains below the forecast power for a predetermined time period.

10. A combined-cycle power plant comprising a wind turbine, a wind farm or the like (for example photovoltaic system), on the one hand, and a power-to-gas unit connected electrically thereto, on the other hand, for implementing the method as claimed in one of the preceding claims.

## Revendications

1. Procédé servant à faire fonctionner une éolienne, un parc éolien, constitué d'une pluralité d'éoliennes, ou des installations similaires et une unité de production de gaz à partir de courant qui y est reliée électriquement,
sachant que l'éolienne ou le parc éolien produit, lorsque le vent est suffisant, une puissance électrique et alimente un réseau électrique raccordé à l'éolienne ou au parc éolien en puissance électrique,
sachant que l'éolienne ou les éoliennes du parc éolien fonctionnent avec une courbe de puissance prédéterminée,
sachant que la puissance électrique est produite par l'éolienne ou par le parc éolien dès qu'une première vitesse de vent (vent de démarrage) est atteinte,
sachant que l'éolienne ou le parc éolien se trouve dans une mode de charge partielle tant que la vitesse du vent se situe entre la première vitesse du vent (vent de démarrage) et une deuxième vitesse du vent (vent nominal),
et
sachant que l'éolienne ou le parc éolien se trouve dans une plage de puissance nominale lorsque la vitesse du vent se trouve dans une plage qui est supérieure à celle de la deuxième vitesse du vent (vitesse de vent nominal),
sachant que seulement une partie prédéfinie de la puissance électrique produite par l'éolienne ou par le parc éolien est consommée par l'unité de production de gaz à partir de courant si bien qu'un gaz combustible, en particulier de l'hydrogène et/ou du gaz méthane ou similaire est produit dans l'unité de production de gaz à partir de courant, **caractérisé en ce**
**qu'**un dispositif de traitement de données est réalisé dans l'éolienne ou dans le parc éolien ou y est associé, en ce que, dans le dispositif de traitement de données, des données prévisionnelles du vent sont traitées, lesquelles s'appliquent à une période de temps prédéterminée, en ce que sur la base des données prévisionnelles du vent, une valeur prévisionnelle pour la puissance est déterminée, que l'éolienne ou le parc éolien peut produire pour la période prévisionnelle avec fiabilité ou avec une grande fiabilité, par exemple avec une probabilité supérieure à 90 %, de préférence à 95 %, et
en ce que la fraction de la puissance électrique, que l'éolienne ou le parc éolien produit en mode de charge partielle et qui n'est pas consommée dans l'unité de production de gaz à partir de courant mais qui, au contraire, alimente le réseau électrique raccordé, est réglée quasiment de manière constante, pendant un laps de temps prédéterminé, par exemple pendant 10 minutes ou plus, par exemple pendant 1 heure, sur la valeur prévisionnelle pour la puissance.

2. Procédé selon la revendication 1,
sachant que l'éolienne ou l'unité de production de gaz à partir de courant sont reliées l'une à l'autre par l'intermédiaire d'un dispositif de communication de données et que des données de l'éolienne, par exemple des données de vitesse du vent, la puissance électrique à la production instantanée, les données prévisionnelles de vent, etc., sont transférées à l'unité de production de gaz à partir de courant et y sont traitées afin de commander l'unité de production de gaz à partir de courant.

3. Procédé selon l'une quelconque des revendications précédentes,
sachant que l'éolienne et l'unité de production de gaz à partir de courant sont disposées l'une par rapport à l'autre à une proximité spatiale, par exemple à une distance allant de 500 m à 20 km.

4. Procédé selon l'une quelconque des revendications précédentes,
sachant que l'éolienne et/ou le parc éolien transfèrent des données, sur la période de temps, au cours de laquelle une puissance quasiment constante alimente le réseau, à une centrale de données afin de commander le réseau électrique.

5. Procédé selon l'une quelconque des revendications précédentes,
sachant que la commande de l'unité de production de gaz à partir de courant dépend des prévisions et des conditions instantanées du vent, et ce faisant, de la production instantanée d'énergie ou de puissance électrique par l'éolienne ou par le parc éolien.

6. Procédé selon la revendication 1,
sachant que l'éolienne ou le parc éolien détermine en permanence la différence entre la puissance instantanée, prédéfinie par le vent, de l'éolienne ou du parc éolien d'une part et la valeur prévisionnelle instantanée d'autre part et que la valeur déterminée de la différence est transmise en tant que signal de commande à l'unité de production de gaz à partir de courant, dans laquelle la valeur transmise est traitée aux fins de la commande de l'unité de production de gaz à partir de courant de sorte que l'unité de production de gaz à partir de courant absorbe systématiquement la puissance, qui correspond à la valeur de la différence déterminée entre la puissance instantanée, prédéfinie par le vent, de l'éolienne ou du parc éolien d'une part et la valeur prévisionnelle d'autre part.

7. Procédé selon l'une quelconque des revendications précédentes,
sachant que la période de temps prévisionnelle est supérieure à 10 minutes, de préférence supérieure à 20 minutes ou supérieure à 30 minutes ou supérieure à 1 heure.

8. Procédé selon l'une quelconque des revendications précédentes,
sachant que l'éolienne ou le parc éolien dispose d'une entrée de données, qui est reliée à l'installation de traitement de données,
sachant que l'entrée de données est reliée à une commande ou à une centrale servant à commander le réseau raccordé et qu'une valeur peut y être prédéfinie, laquelle peut remplacer la valeur de différence déterminée et sachant que la valeur de différence déterminée est transférée, par l'intermédiaire d'une ligne de données, à la commande ou à la centrale afin de commander le réseau électrique.

9. Procédé selon l'une quelconque des revendications précédentes,
sachant que l'unité de production de gaz à partir de courant dispose d'un moteur à combustion, auquel le gaz produit par l'unité de production de gaz à partir de courant est amené, sachant qu'un générateur est disposé en aval du moteur, lequel générateur permet de produire l'énergie ou la puissance électrique, qui peut alimenter le réseau électrique raccordé, et sachant que le moteur à combustion ou le générateur raccordé produit une puissance électrique si la puissance produite de l'éolienne ou du parc éolien reste, pendant une période prédéterminée, inférieure à la puissance prévisionnelle.

10. Centrale électrique combinée, constituée d'une éolienne, d'un parc éolien ou d'installations similaires (par exemple une installation photovoltaïque) d'une part et d'une unité de production de gaz à partir de courant, qui y est reliée électriquement, d'autre part servant à mettre en oeuvre le procédé selon l'une quelconque des revendications précédentes.
